# EUROPEAN PATENT APPLICATION

(11) **EP 2 540 809 A1**
(43) Date of publication of application: **02.01.2013**
(21) Application number: 11747319.9
(22) Date of filing: 22.02.2011
(51) Int. Cl.: C10M 107/10, C10N 20/02, C10N 30/02, C10N 30/06, C10N 30/08, C10N 40/04

(54) **LUBRICANT COMPOSITION**

(30) Priority: 25.02.2010 JP 2010039647
(71) Applicant: Idemitsu Kosan Co., Ltd., Chiyoda-ku Tokyo 100-8321 (JP)
(72) Inventor: TAMOTO Yoshitaka, Ichihara-shi Chiba 299-0107 (JP)
(74) Representative: HOFFMANN EITLE
(86) International application number: PCT/JP2011/053808
(87) International publication number: WO 2011/105358

(57) **Abstract**

A lubricating oil composition of the invention contains: (a) a base oil for a lubricating oil having a kinematic viscosity at 100 degrees C in a range of 2 mm²/s to 10 mm²/s; and (b) a poly-alpha-olefin having a kinematic viscosity at 100 degrees C in a range of 15 mm²/s to 300 mm²/s, the poly-alpha-olefin (b) being produced using a metallocene catalyst, a content of the poly-alpha-olefin (b) being 20 mass% or more based on a total amount of the composition.

## Description

### TECHNICAL FIELD

The present invention relates to a lubricating oil composition, more specifically, a lubricating oil composition suitably usable for a gear device that is used in a manual transmission and a final reduction gear for automobiles, a step-up gear and a reducer for industrial machines, and the like.

### BACKGROUND ART

Energy-saving such as fuel efficiency and source-saving has recently been demanded for global environmental conservation. A lubricating oil composition for a gear device (i.e., a gear oil) used in a manual transmission and a final reduction gear for automobiles and a step-up gear and a reducer for industrial machines is required to have an energy-saving performance through friction-loss reduction. However, if a viscosity of the gear oil is simply reduced, defects such as gear abrasion, decrease in a fatigue life of a tooth flank and gear seizure may be caused although a significant effect for decreasing an oil agitation loss in the device is exhibited. Accordingly, the gear oil is required to achieve viscosity reduction and friction-loss reduction at ordinary temperatures (e.g., from 20 degrees C to 80 degrees C) while maintaining oil-film retention at high temperatures (e.g., 100 degrees C or more). Simultaneously, the gear oil is required to reduce a load to a motor in starting the device by improving a low-temperature fluidity.

For instance, as such a gear oil, there is disclosed a lubricating oil composition containing: a base oil for a lubricating oil having a kinematic viscosity at 100 degrees C of 1.5 mm²/s to 10 mm²/s; 2 mass% to 40 mass% of a high-viscosity synthetic lubricating oil having a kinematic viscosity at 100 degrees C of 40 mm²/s to 500 mm²/s based on a total amount of the composition; and 0.01 mass% to 5 mass% of an extreme pressure additive such as a phosphorous extreme pressure additive based on the total amount of the composition (see Patent Literature 1). Moreover, there is disclosed a fluid composition containing: 1 wt% to 49 wt% of a poly-alpha-olefin base stock having a kinematic viscosity at 100 degrees C of 40 mm²/s to 500 mm²/s; 1 wt% to 95 wt% of a lubricating oil base stock having a kinematic viscosity at 100 degrees C of 2 mm²/s to 10 mm²/s; 1 wt% to 49 wt% of a specified polyol ester; and a functional additive package, and having a kinematic viscosity at 100 degrees C of at least 4 mm²/s (see Patent Literature 2). Moreover, there is disclosed a gear oil composition containing, as a base oil, a mixture of a mineral oil or a synthetic oil having a kinematic viscosity at 100 degrees C of 3.5 mm²/s to 7 mm²/s and a mineral oil or a synthetic oil having a kinematic viscosity at 100 degrees C of 20 mm²/s to 52 mm²/s, and having a kinematic viscosity at 40 degrees C of 80 mm²/s or less (see Patent Literature 3).

### CITATION LIST

### PATENT LITERATURE(S)

Patent Literature 1: WO2004/069967
Patent Literature 2: JP-A-2004-10894
Patent Literature 3: JP-A-2007-39480

### SUMMARY OF THE INVENTION

### PROBLEMS TO BE SOLVED BY THE INVENTION

However, the lubricating oil composition disclosed in Patent Literatures 1 to 3 cannot simultaneously attain the above characteristics required for the gear oil.
Accordingly, an object of the invention is to provide a lubricating oil composition capable of achieving viscosity reduction and friction-loss reduction at ordinary temperatures while maintaining oil-film retention at high temperatures, and simultaneously having an excellent low-temperature fluidity.

### MEANS FOR SOLVING THE PROBLEMS

In order to solve the above-mentioned problems, the invention provides a lubricating oil composition described below.
Specifically, a lubricating oil composition of the invention contains: (a) a base oil for a lubricating oil having a kinematic viscosity at 100 degrees C in a range of 2 mm²/s to 10 mm²/s, and (b) a poly-alpha-olefin having a kinematic viscosity at 100 degrees C in a range of 15 mm²/s to 300 mm²/s, the poly-alpha-olefin (b) being produced using a metallocene catalyst, a content of the poly-alpha-olefin (b) being 20 mass% or more based on a total amount of the composition.

In the lubricating oil composition according to the above aspect of the invention, it is preferable that the lubricating oil composition has a kinematic viscosity at 100 degrees C in a range of 5 mm²/s to 20 mm²/s.
In the lubricating oil composition according to the above aspect of the invention, it is preferable that the poly-alpha-olefin (b) is provided by a poly-alpha-olefin having a kinematic viscosity at 100 degrees C in a range of 40 mm²/s to 150 mm²/s, the poly-alpha-olefin (b) being produced using a metallocene catalyst.

The lubricating oil composition according to the above aspect of the invention is preferably used for a gear device that is used in a manual transmission or a final reduction gear for automobiles, or a step-up gear or a reducer for industrial machines.

Herein, it should be noted that a poly-alpha-olefin is occasionally referred to as PAO, PAO obtained by a metallocene catalyst is occasionally referred to as mPAO, and PAO obtained by conventional methods (e.g., by a BF₃ catalyst, an AlCl₃ catalyst and a Ziegler-type catalyst) is occasionally referred to as conventional PAO.

### ADVANTAGEOUS EFFECTS OF THE INVENTION

According to the invention, there can be provided a lubricating oil composition capable of achieving viscosity reduction and friction-loss reduction at ordinary temperatures while maintaining oil-film retention at high temperatures, and simultaneously having an excellent low-temperature fluidity.

### DESCRIPTION OF EMBODIMENT(S)

A lubricating oil composition of the invention (hereinafter, also referred to as a "composition") contains: (a) a base oil for a lubricating oil having a kinematic viscosity at 100 degrees C in a range of 2 mm²/s to 10 mm²/s; and (b) a poly-alpha-olefin having a kinematic viscosity at 100 degrees C in a range of 15 mm²/s to 300 mm²/s, the poly-alpha-olefin (b) being produced using a metallocene catalyst, a content of the poly-alpha-olefin (b) being 20 mass% or more based on a total amount of the composition. The composition according to the aspect of the invention will be described in detail below.

### Component (a)

A component (a) used in the composition is a base oil for a lubricating oil (hereinafter, simply referred to as a base oil) having a kinematic viscosity at 100 degrees C of 2 mm²/s to 10 mm²/s. When the kinematic viscosity at 100 degrees C is 2 mm²/s or more, evaporation loss is small. When the kinematic viscosity at 100 degrees C is 10 mm²/s or less, power loss due to viscous resistance is small, thereby improving fuel efficiency.

The base oil used in the composition may be a mineral base oil or a synthetic base oil. The kind of the base oil is not particularly limited but may be suitably selected from any mineral oil and synthetic oil that have been conventionally used as a base oil of a lubricating oil for an automobile transmission.
Examples of the mineral base oil include a paraffinic mineral oil, an intermediate mineral oil and a naphthenic mineral oil. Examples of the synthetic base oil include polybutene, polyolefin (an alpha-olefin homopolymer or copolymer such as an ethylene-alpha-olefin copolymer), various esters (such as a polyol ester, a dibasic acid ester and phosphate), various ethers (such as a polyphenylether), polyglycol, alkylbenzene, and alkyl naphthalene.
As the base oil of the invention, one kind of the above mineral base oil may be used alone or two or more kinds thereof may be used in combination. In addition, one kind of the above synthetic base oil may be used alone or two or more kinds thereof may be used in combination. Further, one or more kinds of the above mineral base oil and one or more kinds of the above synthetic base oil may be used in combination.

The mineral base oil preferably has 3.0 or less of %CA measured by a ring analysis and 50 mass ppm or less of a sulfur content. The %CA measured by the ring analysis means a proportion (percentage) of an aromatic content calculated by the n-d-M ring analysis method. The sulfur content is measured based on JIS K 2541. The base oil having 3.0 or less of %CA and 50 mass ppm or less of the sulfur content exhibits favorable oxidation stability to restrict an increase in an acid value and a generation of sludge and provide a lubricating oil composition that is less corrosive to metal. The %CA is more preferably 1.0 or less, much more preferably 0.5 or less while the sulfur content is more preferably 30 mass ppm or less.
In addition, a viscosity index of the base oil is preferably 70 or more, more preferably 100 or more, much more preferably 120 or more. In the base oil having a viscosity index of the aforementioned lower limit or more, a viscosity change due to temperature change is small and improvement in fuel efficiency is obtainable even at low temperatures.

In the composition, a content of the component (a) is preferably in a range of 30 mass% to 80 mass% of a total amount of the composition, more preferably in a range of 40 mass% to 70 mass% in terms of the stability of the lubricating oil composition. When a combination of the mineral base oil and the synthetic base oil is used as the base oil, a content of the mineral base oil is preferably in a range of 0 mass% to 75 mass% (more preferably in a range of 5 mass% to 70 mass%) of the total amount of the composition, and a content of the synthetic base oil is preferably in a range of 5 mass% to 30 mass% (more preferably in a range of 10 mass% to 25 mass%) of the total amount of the composition in terms of the stability of the lubricating oil composition.

### Component (b)

A component (b) used in the composition is a poly-alpha-olefin (mPAO) having a kinematic viscosity at 100 degrees C in a range of 15 mm²/s to 300 mm²/s, which is produced using a metallocene catalyst. When the kinematic viscosity at 100 degrees C is less than 15 mm²/s, the lubricating oil composition is less likely to attain a high viscosity index. When the kinematic viscosity at 100 degrees C exceeds 300 mm²/s, shear stability is likely to be deteriorated. In view of the above, the kinematic viscosity at 100 degrees C is more preferably in a range of 40 mm²/s to 150 mm²/s. A viscosity index of mPAO is typically 130 or more, more preferably 170 or more. Since the viscosity index of mPAO is at the above lower limit or more, the viscosity index of the lubricating oil composition is also increased to improve low-temperature viscosity characteristics.

A monomer for producing mPAO used in the invention is exemplified by an alpha-olefin having 3 to 14 carbon atoms. One or more kinds of alpha-olefins selected from 1-octene, 1-decene and 1-dodecene is preferable because mPAO having the target kinematic viscosity is easily obtainable from such alpha-olefins.

The metallocene catalyst is exemplified by a catalyst including a combination of a metallocene compound and a promoter. The metallocene compound is preferably represented by the following formula (1):

(RC₅H₄)₂MX₂ (1)

In the formula (1): R represents a hydrogen atom or a hydrocarbon group having 1 to 10 carbon atoms; M represents a transition metal element of the fourth group in the periodic series; and X represents a covalently-bonded ligand or an ionically-bonded ligand.

In the formula (1), R is preferably a hydrogen atom or a hydrocarbon group having 1 to 4 carbon atoms. Specific examples of M include titanium, zirconium and hafnium, among which zirconium is preferable. Specific examples of X include a hydrogen atom, a halogen atom, a hydrocarbon group having 1 to 20 carbon atoms (preferably 1 to 10 carbon atoms), an alkoxy group having 1 to 20 carbon atoms (preferably 1 to 10 carbon atoms), an amino group, a phosphorus-containing hydrocarbon group having 1 to 20 carbon atoms (preferably 1 to 12 carbon atoms) (e.g., a diphenylphosphine group), a silicon-containing hydrocarbon group having 1 to 20 carbon atoms (preferably 1 to 12 carbon atoms) (e.g., a trimethylsilyl group), and a boron compound containing a hydrocarbon group having 1 to 20 carbon atom (preferably 1 to 12 carbon atoms) or halogen (e.g., B(C₆H₅)₄ and BF₄), among which a group selected from a hydrogen atom, a halogen atom, a hydrocarbon group and an alkoxy group is preferable.

Examples of the metallocene compound include: bis(cyclopentadienyl) zirconium dichloride, bis(methylcyclopentadienyl) zirconium dichloride, bis(ethylcyclopentadienyl) zirconium dichloride, bis(iso-propylcyclopentadienyl) zirconium dichloride, bis(n-propylcyclopentadienyl) zirconium dichloride, bis(n-butylcyclopentadienyl) zirconium dichloride, bis(t-butylcyclopentadienyl) zirconium dichloride, bis(thexylcyclopentadienyl) zirconium dichloride, bis(trimethylsilylcyclopentadienyl) zirconium dichloride, bis(trimethylsilylmethylcyclopentadienyl) zirconium dichloride, bis(cyclopentadienyl) zirconium chlorohydride, bis(cyclopentadienyl) methylzirconium chloride, bis(cyclopentadienyl) ethylzirconium chloride, bis(cyclopentadienyl) methoxyzirconium chloride, bis(cyclopentadienyl) phenylzirconium chloride, bis(cyclopentadienyl) dimethylzirconium, bis(cyclopentadienyl) diphenylzirconium, bis(cyclopentadienyl) dineopentylzirconium, bis(cyclopentadienyl) dihydrozirconium, and bis(cyclopentadienyl) dimethoxyzirconium; a compound obtained by substituting a chlorine atom in the above compounds with a bromine atom, an iodine atom, a hydrogen atom, a methyl group or a phenyl group; and a compound obtained by substituting zirconium (central metal) in the above compounds with titanium or hafnium.

The promoter is preferably methylaluminoxane. Methylaluminoxane is not particularly limited but any known methylaluminoxane is usable, examples of which include a chain methylaluminoxane represented by the following formula (2) and a cyclic methylaluminoxane represented by the following formula (3).

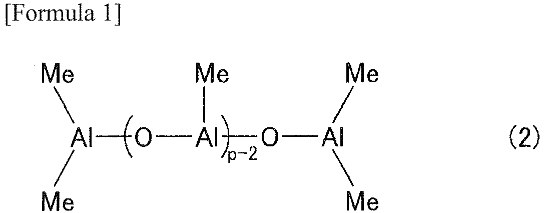

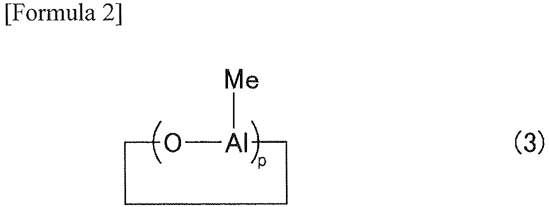

In the formulae (2) and (3), p represents a polymerization degree and is typically from 3 to 50, preferably from 7 to 40.

The production method of methylaluminoxane is exemplified by a method of bringing methylaluminium into contact with a condensing agent such as water, but not limited thereto. Methylaluminoxane may be produced through reaction according to any known methods.

A blend ratio (a molar ratio) of the metallocene compound to methylaluminoxane is typically from 15 to 150, preferably from 20 to 120, more preferably from 25 to 100. At the blend ratio of 15 or more, catalyst activation is expressed and a dimer of alpha-olefins is formed, thereby avoiding decrease in a yield of a trimer or a multimer suitable as the base oil. On the other hand, at the blend ratio of 150 or less, incomplete removal of the catalyst is avoidable.

In addition to the above metallocene catalyst, the metallocene catalyst is exemplified by a metallocene compound having a crosslinking group. As such a metallocene compound, a metallocene compound having two crosslinking groups is preferable, and a meso-symmetric metallocene compound is particularly preferable. The metallocene catalyst using the meso-symmetric metallocene compound is exemplified by a metallocene catalyst containing: a catalyst component (A) that is a metallocene compound represented by the following formula (4); and a catalyst component (B) that contains a compound (B-1) capable of forming an ionic complex in reaction with the metallocene compound (the catalyst component (A)) or a derivative thereof, and at least one kind of a component (B-2) selected from aluminoxane.

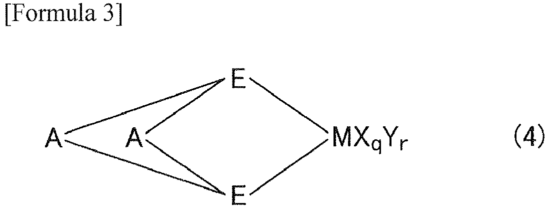

The compound represented by the formula (4) is meso-symmetric. In the formula (4), M represents a metal element from the third group to the tenth group in the periodic series. X represents a σ-bonded ligand. When a plurality of X are present, the plurality of X may be the same as or different from each other. Y represents a Lewis base. When a plurality of Y are present, the plurality of Y may be the same as or different from each other. A represents a hydrocarbon group having 1 to 20 carbon atoms, a halogen-containing hydrocarbon group having 1 to 20 carbon atoms, a silicon-containing group, a germanium-containing group, a tin-containing group, and a crosslinking group selected from -O-, -CO-, -S-, -SO₂- -Se-, -NR¹-, -PR¹-, -P(O)R¹-, -BR¹- and -AlR¹-. Two A may be the same as or different from each other. R¹ represents a hydrogen atom, a halogen atom, a hydrocarbon atom having 1 to 20 carbon atoms, or a halogen-containing hydrocarbon group having 1 to 20 carbon atoms. q represents [(an atom value of M) - 2] by an integer of 1 to 5. r represents an integer of 0 to 3. E is a group represented by the following formulae (5) and (6). Two E are the same.
The meso-symmetric compound refers to a transition metal compound in which two E are crosslinked by two crosslinking groups in a bonding pattern of (1,1')(2,2').

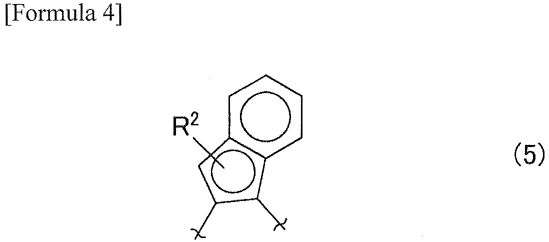

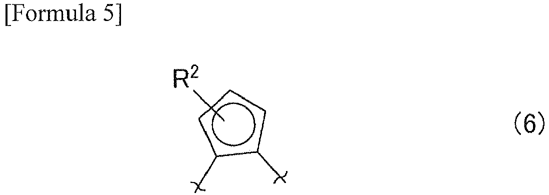

In the formulae (5) and (6), R² represents a group selected from a group consisting of a hydrogen atom, a halogen atom, a hydrocarbon atom having 1 to 20 carbon atoms, a halogen-containing hydrocarbon group having 1 to 4 carbon atoms, a silicon-containing group and a heteroatom-containing group. When a plurality of R² are present, the plurality of R² may be the same as or different from each other. A bond represented by a wavy line represents a bond with a crosslinking group A.

The crosslinking group A in the formula (4) is preferably represented by the following formula (7).

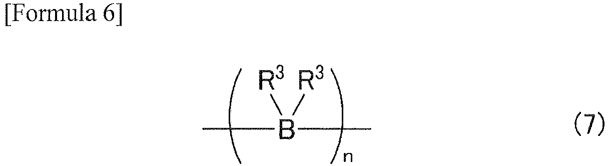

In the formula (7), B is a skeleton of the crosslinking group and represents a carbon atom, a silicon atom, a boron atom, a nitrogen atom, a germanium atom, a phosphorus atom, or an aluminium atom. R³ represents a hydrogen atom, a carbon atom, an oxygen atom, an aliphatic hydrocarbon group, an aromatic hydrocarbon group, an amine-containing group, or a halogen-containing group. n is 1 or 2.

Examples of the metallocene compound represented by the formula (4) include (1,1'-ethylene)(2,2'-ethylene)-bis(indenyl) zirconium dichloride, (1,1'-methylene)(2,2'-methylene)-bis(indenyl) zirconium dichloride, (1,1'-isopropylidene)(2,2'-isopropylidene)-bis(indenyl) zirconium dichloride, (1,1'-ethylene)(2,2'-ethylene)-bis(3-methylindenyl) zirconium dichloride, (1,1'-ethylene)(2,2'-ethylene)-bis(4,5-benzoindenyl) zirconium dichloride, (1,1'-ethylene)(2,2'-ethylene)-bis(4-isopropylindenyl) zirconium dichloride, (1,1'-ethylene)(2,2'-ethylene)-bis(5,6-dimethylindenyl) zirconium dichloride, (1,1'-ethylene)(2,2'-ethylene)-bis(4,7-diisopropylindenyl) zirconium dichloride, (1,1'-ethylene)(2,2'-ethylene)-bis(4-phenylindenyl) zirconium dichloride, (1,1'-ethylene)(2,2'-ethylene)-bis(3-methyl-4-isopropylindenyl) zirconium dichloride, (1,1'-ethylene)(2,2'-ethylene)-bis(5,6-benzoindenyl) zirconium dichloride, (1,1'-dimethylsilylene)(2,2'-dimethylsilylene)bis(cyclopentadienyl) zirconium dichloride, (1,1'-dimethylsilylene)(2,2'-dimethylsilylene)bis(indenyl) zirconium dichloride, (1,1'-dimethylsilylene)(2,2'-dimethylsilylene)bis(3-methylindenyl) zirconium dichloride, (1,1'-dimethylsilylene)(2,2'-dimethylsilylene)bis(3-n-butylindenyl) zirconium dichloride, (1,1'-dimethylsilylene)(2,2'-dimethylsilylene)bis(3-i-propylindenyl) zirconium dichloride, (1,1'-dimethylsilylene)(2,2'-dimethylsilylene)bis(3-trimethylsilylmethylindenyl) zirconium dichloride, (1,1'-dimethylsilylene)(2,2'-dimethylsilylene)bis(3-phenylindenyl) zirconium dichloride, (1,1'-dimethylsilylene)(2,2'-dimethylsilylene)bis(4,5-benzoindenyl) zirconium dichloride, (1,1'-dimethylsilylene)(2,2'-dimethylsilylene)bis(4-isopropylindenyl) zirconium dichloride, (1,1'-dimethylsilylene)(2,2'-dimethylsilylene)bis(5,6-dimethylindenyl) zirconium dichloride, (1,1 '-dimethylsilylene)(2,2'-dimethylsilylene)bis(4,7-di-i-propylindenyl) zirconium dichloride, (1,1 '-dimethylsilylene)(2,2'-dimethylsilylene)bis(4-phenylindenyl) zirconium dichloride, (1,1'-dimethylsilylene)(2,2'-dimethylsilylene)bis(3-methyl-4-i-propylindenyl) zirconium dichloride, (1,1'-dimethylsilylene)(2,2'-dimethylsilylene)bis(5,6-benzoindenyl) zirconium dichloride, and a compound obtained by substituting zirconium with titanium or hafnium in the above compounds. However, the metallocene compound is not limited to the examples.

As the catalyst component (B-1) in the catalyst component (B), any compound capable of forming an ionic complex in reaction with the metallocene compound of the catalyst component (A) is usable, but a compound represented by the following formula (8) or (9) is preferably usable.

([L¹-R⁴]^{k+})ₐ([Z]⁻)_{b} (8)

([L²]^{k+})ₐ([Z]⁻)_{b} (9)

In the formulae (8) and (9), L¹ represents a Lewis base, L² represents M², R⁵R⁶M³, R⁷₃C or R⁸M³. [Z]⁻ represents a non-coordinating anion [Z¹]⁻ or [Z²]⁻. Herein, [Z¹]⁻ represents an anion in which a plurality of groups are bonded to an element(s), namely, [M¹G¹G²···G^{f}]⁻, in which M¹ represents elements from the fifth group to the fifteenth group of the periodic series, preferably elements from the thirteenth group to the fifteenth group of the periodic series. G¹ to G^{f} each represent a hydrogen atom, a halogen atom, an alkyl group having 1 to 20 carbon atoms, a dialkylamino group having 2 to 40 carbon atoms, an alkoxy group having 1 to 20 carbon atoms, an aryl group having 6 to 20 carbon atoms, an aryloxy group having 6 to 20 carbon atoms, an alkyl aryl group having 7 to 40 carbon atoms, an aryl alkyl group having 7 to 40 carbon atoms, a halogen-substituted hydrocarbon group having 1 to 20 carbon atoms, an acyloxy group having 1 to 20 carbon atoms, an organic metalloid group, or a heteroatom-containing hydrocarbon group having 2 to 20 carbon atoms. Two or more of G¹ to G^{f} may form a ring. f represents an integer of [(element value of central metal M¹)+1]. [Z²]⁻ represents: a conjugate base of a Bronsted acid alone or a combination of a Bronsted acid and a Lewis acid, the conjugate base having a logarithm of a reciprocal number of its acid dissociation constant (pKa) of -10 or less; or a conjugate salt of an acid generally defined as a super strong acid. [Z²]⁻ may be coordinated with a Lewis base. R⁴ represents a hydrogen atom, an alkyl group having 1 to 20 carbon atoms, an aryl group having 6 to 20 carbon atoms, an alkyl aryl group or an aryl alkyl group. R⁵ and R⁶ each represent a cyclopentadienyl group, a substituted cyclopentadienyl group, an indenyl group or a fluorenyl group. R⁷ represents an alkyl group having 1 to 20 carbon atoms, an aryl group, an alkyl aryl group or an aryl alkyl group. R⁸ represents a macrocyclic ligand such as tetraphenylporphyrin or phthalocyanine. k represents an ionic valence of [L¹-R⁴] and [L²] and are an integer of 1 to 3. a is an integer of 1 or more and satisfies b=(k×a). M² represents elements from the first group to the third group, from the eleventh group to the thirteenth group and the seventeenth group in the periodic series. M³ represents elements from the seventh group to the twelfth group in the periodic series.

Specific examples of L¹ include:amines such as ammonia, methyl amine, aniline, dimethylamine, diethylamine, N-methyl aniline, diphenylamine, N,N-dimethyl aniline, trimethylamine, triethylamine, tri-n-butylamine, methyldiphenylamine, pyridine, p-bromo-N,N-dimethylaniline and p-nitro-N,N-dimethylaniline; phosphines such as triethylphosphine, triphenylphosphine and diphenylphosphine; thioethers such as tetrahydrothiophene; esters such as benzoic ethyl; and nitriles such as benzonitrile.
Specific examples of R⁴ include hydrogen, a methyl group, an ethyl group, a benzyl group and a trityl group. Specific examples of R⁵ and R⁶ include a cyclopentadienyl group, a methylcyclopentadienyl group, an ethylcyclopentadienyl group and a pentamethylcyclopentadienyl group. Specific examples of R⁷ include a phenyl group, a p-tolyl group and a p-methoxyphenyl group. Specific examples of R⁸ include tetraphenylporphyrin, phthalocyanine, allyl and methallyl. Specific examples of M² include Li, Na, K, Ag, Cu, Br and I. Specific examples of M³ include Mn, Fe, Co, Ni and Zn. In [Z¹]⁻, namely, [M¹G¹G² ···G^{f}], specific examples of M¹ includes B, Al, Si, P, As and Sb, among which B and Al are preferable. Specific examples of G¹ and G² to G^{f} include: as a dialkylamino group, a dimethylamino group and a diethylamino group; as an alkoxy group or an aryloxy group, a methoxy group, an ethoxy group, an n-butoxy group and a phenoxy group; as a hydrocarbon group, a methyl group, an ethyl group, an n-propyl group, an isopropyl group, an n-butyl group, an isobutyl group, an n-octyl group, an n-eicosyl group, a phenyl group, a p-tolyl group, a benzyl group, 4-t-butylphenyl group and 3,5-dimethylphenyl group; as a halogen atom, fluorine, chlorine, bromine and iodine; as a heteroatom-containing hydrocarbon group, a p-fluorophenyl group, a 3,5-difluorophenyl group, a pentachlorophenyl group, a 3,4,5-trifluorophenyl group, a pentafluorophenyl group, a 3,5-bis(trifluoromethyl)phenyl group and a bis(trimethylsilyl)methyl group; as an organic methalloid group, a pentamethylantimony group, a trimethylsilyl group, a trimethylgermyl group, a diphenylarsine group, a dicyclohexylantimony group and a diphenyl boron.

Specific examples of the non-coordinating anion, namely, a conjugate base [Z²]⁻ of a Bronsted acid alone or a combination of a Bronsted acid and a Lewis acid, the conjugate base having a logarithm of a reciprocal number of its acid dissociation constant (pKa) of -10 or less include trifluoromethane sulfonate anion (CF₃SO₃)⁻, bis(trifluoromethane sulfonyl)methyl anion, bis(trifluoromethane sulfonyl)benzyl anion, bis(trifluoromethane sulfonyl)amide, perchloric acid anion (ClO₄)⁻, trifluoroacetic acid anion (CF₃CO₂)⁻, hexafluoroantimony anion (SbF₆)⁻, fluorosulfonate anion (FSO₃)⁻, chlorosulfonate anion (ClSO₃)⁻, fluorosulfonate anion / antimony pentafluoride (FSO₃/SbF₅)⁻, fluorosulfonate anion / arsenic pentafluoride (FSO₃/AsF₅)⁻ and trifluoromethane sulfonate / antimony pentafluoride (CF₃SO₃/SbF₅)⁻.

Specific examples of the ionic compound forming the ionic complex in reaction with the transition metal compound of the catalyst component (A), namely, the catalyst component (B-1) include N,N-dimethyl anilinium tetrakis(pentafluorophenyl)borate, triethyl ammonium tetraphenyl borate, tri-n-butyl ammonium tetraphenyl borate, trimethyl ammonium tetraphenyl borate, tetraethyl ammonium tetraphenyl borate, methyl(tri-n-butyl) ammonium tetraphenyl borate, benzyl(tri-n-butyl) ammonium tetraphenyl borate, dimethyl diphenyl ammonium tetraphenyl borate, triphenyl(methyl) ammonium tetraphenyl borate, trimethyl anilinium tetraphenyl borate, methylpyridinium tetraphenyl borate, benzylpyridinium tetraphenyl borate, methyl(2-cyanopyridinium) tetraphenyl borate, triethylammonium tetrakis(pentafluorophenyl)borate, tri-n-butylammonium tetrakis(pentafluorophenyl)borate, triphenylammonium tetrakis(pentafluorophenyl)borate, tetra-n-butylammonium tetrakis(pentafluorophenyl)borate, tetraethylammonium tetrakis(pentafluorophenyl)borate, benzyl(tri-n-butyl)ammonium tetrakis(pentafluorophenyl)borate, methyldiphenylammonium tetrakis(pentafluorophenyl)borate, triphenyl(methyl)ammonium tetrakis(pentafluorophenyl)borate, methylanilinium tetrakis(pentafluorophenyl)borate, dimethylanilinium tetrakis(pentafluorophenyl)borate, trimethylanilinium tetrakis(pentafluorophenyl)borate, methylpyridinium tetrakis(pentafluorophenyl)borate, benzylpyridinium tetrakis(pentafluorophenyl)borate, methyl(2-cyanopyridinium) tetrakis(pentafluorophenyl)borate, benzyl(2-cyanopyridinium) tetrakis(pentafluorophenyl)borate, methyl(4-cyanopyridinium) tetrakis(pentafluorophenyl)borate, triphenylphosphonium tetrakis(pentafluorophenyl)borate, dimethylanilinium tetrakis[bis(3,5-ditrifluoromethyl)phenyl]borate, ferrocenium tetraphenyl borate, silver tetraphenyl borate, trityl tetraphenyl borate, tetraphenyl porphyrin manganese tetraphenyl borate, ferrocenium tetrakis(pentafluorophenyl)borate, (1,1'-dimethyl ferrocenium) tetrakis(pentafluorophenyl)borate, decamethyl ferrocenium tetrakis(pentafluorophenyl)borate, silver tetrakis(pentafluorophenyl)borate, trityl tetrakis(pentafluorophenyl)borate, lithium tetrakis(pentafluorophenyl)borate, sodium tetrakis(pentafluorophenyl)borate, tetraphenyl porphyrin manganese tetrakis(pentafluorophenyl)borate, silver tetrafluoroborate, silver hexafluorophosphate, silver hexafluoroarsenate, silver perchloric acid, silver trifluoroacetate and silver trifluoromethane sulfonate. One kind of these catalyst components (B-1) may be used alone or two or more kinds thereof may be used in combination.

Examples of aluminoxane as the catalyst component (B-2) include a chain aluminoxane represented by the following formula (10) and a cyclic aluminoxane represented by the following formula (11).

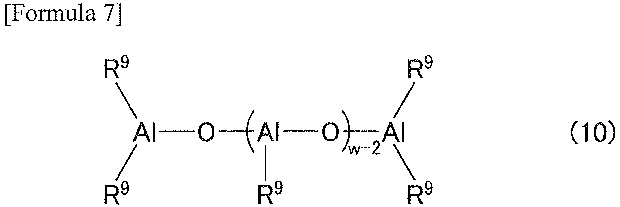

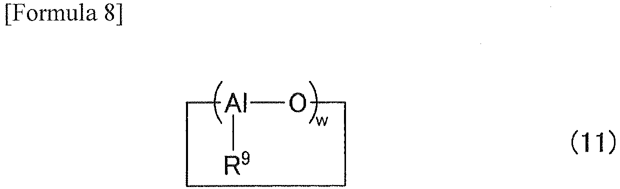

In the formulae (10) and (11), R⁹ represents a hydrocarbon group having 1 to 20 carbon atoms, preferably 1 to 12 carbon atoms, such as an alkyl group, an alkenyl group, an aryl group and an aryl alkyl group, or a halogen atom. w represents an average polymerization degree and is typically an integer of 2 to 50, preferably 2 to 40. R⁹ may be the same as or different from each other.

The production method of aluminoxane is exemplified by a method of bringing alkylaluminium into contact with a condensing agent such as water, but not limited thereto. Aluminoxane may be produced through reaction according to any known methods.
Examples of the methods include: (1) dissolving an organoaluminum compound in an organic solvent and bringing the prepared product into contact with water; (2) initially adding an organoaluminum compound in polymerization and subsequently adding water thereto; (3) reacting an organoaluminum compound with crystallization water contained in a metal salt and the like or adsorbed water in inorganic or organic substance; and (4) reacting tetralkyl dialminoxane with trialkylaluminium, followed by reaction with water. Note that aluminoxane may be insoluble in toluene. One kind of the aluminoxane may be used alone or two or more kinds thereof may be used in combination.

When the catalyst component (B-1) is used as the catalyst component (B), a usage ratio of the catalyst component (A) to the catalyst component (B) is desirably in a range of 10:1 to 1:100, more preferably in a range of 2:1 to 1:10 in terms of a molar ratio. When the ratio falls beyond the range, a catalyst cost per unit mass of a polymer becomes expensive, which is not practical. When the catalyst component (B-2) is used, a usage ratio of the catalyst component (A) to the catalyst component (B-2) is preferably in a range of 1:1 to 1:1000000, more preferably in a range of 1:10 to 1:10000 in terms of a molar ratio. When the usage ratio falls beyond the range, a catalyst cost per unit mass of a polymer becomes expensive, which is not practical. As the catalyst component (B), each of the catalyst components (B-1) and (B-2) may be used alone, or two or more kinds of the catalyst components (B-1) and (B-2) may be used in combination.

As the monomer for producing mPAO, an alpha-olefin having 3 to 14 carbon atoms is typically used. Specific examples of such an alpha-olefin include propylene, 1-butene, 3-methyl-1-butene, 4-methyl-1-butene, 4-phenyl-1-butene, 1-pentene, 3-methyl-1-pentene, 4-methyl-1-pentene, 3,3-dimethyl-1-pentene, 3,4-dimethyl-1-pentene, 4,4-dimethyl-1-pentene, 1-hexane, 4-methyl-1-hexene, 5-methyl-1-hexene, 6-phenyl-1-hexene, 1-octene, 1-decene, 1-dodecene and 1-tetradecene. Among these, the alpha-olefin is preferably selected from 1-octene, 1-decene and 1-dodecene, and the alpha-olefin is particularly preferably 1-decene.

A blend ratio [the metallocene compound (mmol)/the alpha-olefin (L)] of the metallocene compound represented by the formula (1) or (4) to the alpha-olefin having 3 to 14 carbon atoms is typically from 0.01 to 0.4, preferably from 0.05 to 0.3, more preferably from 0.1 to 0.2. When the blend ratio is 0.01 or more, sufficient catalyst activation is obtained. On the other hand, when the blend ratio is 0.4 or less, a yield of a trimer or a multimer suitable as the base oil is improved to avoid incomplete removal of the catalyst.

Polymerization of the alpha-olefin having 3 to 14 carbon atoms is preferably conducted in the presence of hydrogen. An added amount of hydrogen is typically in a range of 0.1 kPa to 50 kPa, preferably in a range of 0.5 kPa to 30 kPa, more preferably in a range of 1 kPa to 10 kPa. When the amount of hydrogen is 0.1 kPa or more, sufficient catalyst activation is obtained. On the other hand, when the amount of hydrogen is 50 kPa or less, formation of a saturated one from an alpha-olefin (starting material) is reduced, so that a yield of desired mPAO is improved.

Any reaction methods for polymerizing the alpha-olefin having 3 to 14 carbon atoms are usable. Polymerization may be conducted without a solvent or in a solvent. When a reaction solvent is used, examples thereof include: an aromatic hydrocarbon such as benzene, toluene, xylene and ethylbenzene; an alicyclic hydrocarbon such as cyclopentane, cyclohexane and methylcyclohexane; an aliphatic hydrocarbon such as pentane, hexane, heptane and octane; and a halogenated hydrocarbon such as chloroform and dichloromethane. A temperature in polymerization reaction is typically in a range of 0 degree C to 100 degrees C, preferably in a range of 20 degrees C to 80 degrees C, more preferably in a range of 30 degrees C to 70 degrees C. When the temperature falls within the range, sufficient catalyst activation is obtained. Moreover, a yield of a trimer or a multimer oligomer suitable as the base oil is improved. Polymerization by the above method enables production of mPAO having a selection ratio of a trimer or a multimer of 50% or more.

The obtained mPAO by the above method may be further treated as desired. For instance, for improving heat stability and oxidation stability, mPAO may be hydrotreated. For obtaining a base oil for a lubricating oil having desired characteristics, mPAO may be distilled. A temperature of the hydrotreatment is typically in a range of 50 degrees C to 300 degrees C, preferably in a range of 60 degrees C to 250 degrees C, more preferably in a range of 70 degrees C to 200 degrees C. A hydrogen pressure is typically in a range of 0.1 MPa to 10 MPa, preferably in a range of 0.5 MPa to 2 MPa, more preferably in a range of 0.7 MPa to 1.5 MPa. In the hydrotreatment, general hydrogenation catalysts including Pd and Ni are usable. A temperature in the distillation is typically in a range of 200 degrees C to 300 degrees C, preferably in a range of 220 degrees C to 280 degrees C, more preferably in a range of 230 degrees C to 270 degrees C. A pressure is typically in a range of 0.1 Pa to 15 Pa, preferably in a range of 0.4 Pa to 7 Pa, more preferably in a range of 0.6 Pa to 4 Pa.

mPAO obtained by the above method and mPAO after the hydrotreatment or the distillation have about one short-chain branch per molecule (a short-chain branch is typically in a range of 0.6 to 1.2, preferably in a range of 0.7 to 1.1, more preferably in a range of 0.8 to 1.0) (herein, a methyl group, an ethyl group and an propyl group are referred to as a short-chain branch). In addition, the short-chain branch is mainly a methyl group. A ratio of the methyl group is typically 80 mol% or more, preferably 85 mol% or more, more preferably 90 mol% or more.

The content of the component (b) in the composition is required to be 20 mass% or more based on a total amount of the composition. When the content of the component (b) is less than 20 mass%, an object of the invention cannot be achieved. In order to further improve low-temperature fluidity, the content of the component (b) is preferably in a range of 25 mass% to 70 mass%, more preferably in a range of 30 mass% to 60 mass%.

The composition containing the components (a) and (b) preferably has a kinematic viscosity at 100 degrees C of 5 mm²/s to 20 mm²/s, more preferably 6 mm²/s to 15 mm²/s. When the kinematic viscosity is less than the lower limit, abrasion or seizure tends to easily occur. When the kinematic viscosity exceeds the upper limit, fuel-saving effects tend to be difficult to attain.

### Other Additives

An additive for providing necessary characteristics as a lubricating oil composition may be further added to the composition. When the composition is used as a lubricating oil composition for a gear device that is used in a manual transmission and a final reduction gear for automobiles, a step-up gear and a reducer for industrial machines, and the like, it is preferable that an antiwear agent and an extreme pressure agent are further added to the composition.
Examples of the antiwear agent and the extreme pressure agent include sulfur, phosphorus, and boric antiwear agents/extreme pressure agents. Examples of the sulfur antiwear agent/extreme pressure agent include an olefin sulfide, a sulfurized fat and oil, an ester sulfide, thiocarbonates, dithiocarbamates and polysulfides. Examples of the phosphorus antiwear agent/extreme pressure agent include zinc dithiophosphate, phosphite, alkyl or aryl acid phosphate, an amine salt thereof, and trialkyl or triaryl phosphate. The content of such antiwear agent/extreme pressure agent is not particularly limited, but falls within a range of 0.1 mass% to 20 mass% based on the total amount of the composition.

In addition to the above antiwear agent/extreme pressure agent, the lubricating oil composition of the invention may be added as need with other additives such as an antioxidant, a metal detergent, an ashless dispersant, a pour point depressant, a rust inhibitor, an anticorrosive agent, a friction modifier and an antifoaming agent as long as advantages of the invention are not hampered.

Examples of the antioxidant include an amine antioxidant (e.g., diphenylamines and naphthylamines), a phenol antioxidant and a sulfur antioxidant. The content of the antioxidant is not particularly limited, but falls within a range of 0.05 mass% to 7 mass% based on the total amount of the composition.

Examples of the metal detergent include sulfonate, phenate, salicylate and naphthenate of alkali metal (e.g., sodium (Na) and potassium (K)) or alkaline earth metal (e.g., calcium (Ca) and magnesium (Mg)). The content of the metal detergent is not particularly limited, but falls within a range of 0.1 mass% to 10 mass% based on the total amount of the composition.

Examples of the ashless dispersant include a succinimide compound, a boron-based imide compound, a Mannich dispersant and an acid amide compound. The content of the ashless dispersant is not particularly limited, but falls within a range of 0.1 mass% to 20 mass% based on the total amount of the composition.

The pour point depressant is exemplified by a polymethacrylate having a weight average molecular weight of 50,000 to 150,000. The content of the pour point depressant is not particularly limited, but falls within a range of 0.05 mass% to 2 mass% based on the total amount of the composition.

Examples of the rust inhibitor include a fatty acid, an alkenylsuccinic acid half ester, a fatty acid soap, an alkyl sulfonate, a fatty acid ester of polyhydric alcohol, a fatty acid amide, oxidized paraffin and an alkylpolyoxyethylene ether. The content of the rust inhibitor is not particularly limited, but falls within a range of 0.01 mass% to 3 mass% based on the total amount of the composition.

Examples of the anticorrosive agent include a benzotriazole anticorrosive agent, a benzimidazole anticorrosive agent, a benzothiazole anticorrosive agent and a thiadiazole anticorrosive agent. The content of the anticorrosive agent is not particularly limited, but falls within a range of 0.01 mass% to 1 mass% based on the total amount of the composition.

Examples of the friction modifier include an organic molybdenum compound, a fatty acid, higher alcohol, a fatty acid ester, oils and fats, an amine, an amide, an ester sulfide, a phosphate, a phosphite ester and a phosphate amine salt. The content of the friction modifier is not particularly limited, but falls within a range of 0.01 mass% to 10 mass% based on the total amount of the composition.

Examples of the antifoaming agent include a silicone compound and an ester compound. The content of the antifoaming agent is not particularly limited, but falls within a range of 1 mass ppm to 5000 mass ppm based on the total amount of the composition.

### Examples

Next, the invention will be further described in detail based on Examples, which by no means limit the invention. Properties (i.e., kinematic viscosities at 40 degrees C and 100 degrees C, an extrapolated viscosity, a viscosity index, a low-temperature viscosity, a traction coefficient and friction loss) of a lubricating oil composition (sample oil) in each Example were measured by the following method.
(1) Kinematic Viscosities at 40 degrees C and 100 degrees C
   Kinematic viscosities at 40 degrees C and 100 degrees C (unit: mm²/s) were measured according to a method described in JIS K2283.
(2) Extrapolated Viscosity
   An extrapolated viscosity at 160 degrees C was calculated according to a method described in Annex 1 of JIS K2283.
(3) Viscosity Index
   A viscosity index was measured according to a method described in JIS K2283.
(4) Low-Temperature Viscosity (BF Viscosity)
   A viscosity at -40 degrees C (BF viscosity, unit: mPa·s) was measured according to a method described in ASTM D 2983.
(5) Traction Coefficient
   A traction coefficient was measured using a traction measurement device (manufactured by PCS instruments, product name; "MTM Traction Measurement System") under the following conditions:
   Temperature: 40 degrees C;
   Average speed: 4m/s;
   Load: 45N; and
   Slide roll ratio (SRR): 5%.
(6) Friction Loss (Oil Temperature Rise Test)
   A sample oil was fed in an FZG gear test machine (specifically, FZG test machine defined according to ISO 14635-2, test gears: a type A gear set defined according to ISO 14635-1, an oiling system: an oil bath type (shaft center level), the starting oil temperature: from 21 degrees C to 23 degrees C). Subsequently, the FZG gear test machine was operated under the following two test conditions, where friction loss was evaluated based on rise of an oil temperature in a gear box after the elapse of 20 minutes and 40 minutes. Note that the less the rise of the oil temperature is, the less the friction loss is.
   Test Condition 1: a speed of 16.6 m/s and a torque of 61 Nm
   Test Condition 2: a speed of 8.3m/s and a torque of 302 Nm

### Manufacturing Example 1

First, to a 2-L Schlenk glass bottle, under nitrogen atmosphere, 700 mL of dehydrated toluene, 40 mmol of triisobutyl aluminium, 0.8 mmol of (1,1'-dimethylsilylene)(2,2'-dimethylsilylene)-bis(cyclopentadienyl)zirconium dichloride, and 1.6 mmol of powdery N,N-dimethylanilinium tetrakis(pentafluorophenyl)borate were put and stirred for one minute at the room temperature. Subsequently, 100 mL of 1-decene was added thereto and further stirred for one hour at the room temperature. Thus, a catalyst mixture was obtained.
A stainless steel-made reactor having an inner volume of 107 L was completely dried, followed by nitrogen substitution. Subsequently, 40 L of 1-decene and 20 mmol of triisobutylaluminium were put into the reactor and heated to 105 degrees C. After 80 mL of the obtained catalyst mixture was put into the reactor, 0.02 MPaG of hydrogen was introduced thereinto and heated to 110 degrees C to start polymerization. At every 60 minutes thereafter, 80 mL of the catalyst mixture was added and reacted for 300 minutes at 110 degrees C. Subsequently, 100 mL of methanol was put and the polymerization was stopped.
20 L of the contents was removed into each of two 100-L stainless steel-made vessels. 20 L of toluene and 20 L of a 1-mass% NaOH aqueous solution were put into each vessel, and stirred for one hour. After each vessel was left to stand still for one hour, an aqueous phase was removed and 20 L of deionized water was put into each vessel and stirred for one hour. After each vessel was left to stand still for one hour, an aqueous phase was removed. This operation was repeated twice. After an organic layer was filtrated with a 2-µm filter, the obtained product was transferred to a stainless steel-made reactor having an inner volume of 107 L. Characteristic components such as toluene, the starting material and methanol were distilled away at 140 degrees C under a reduced pressure of about 3.0x 10⁻¹ MPa, so that 24.6 kg of a colorless, transparent and viscous liquid was obtained. 5 kg of the obtained viscous liquid was distilled at 180 degrees C under a reduced pressure of 5×10⁻⁶MPa using a thin-film distillation unit (a short path distillation unit "KDL-5" manufactured by UIC GmbH), so that components having twenty repeating units or less were completely removed and 4.5 kg of colorless, transparent and viscous liquid was obtained.
3.0 kg of the obtained viscous liquid was put into a stainless steel-made autoclave having an inner volume of 5 L. A stabilized nickel catalyst (product name "SN750" manufactured by SAKAI CHEMICAL INDUSTRY CO., LTD.) was added at 1 mass% in terms of a mass ratio and then reacted at 130 degrees C under 2 MPa of hydrogen for six hours. After the reaction, the temperature was cooled down to around 80 degrees C and the contents were removed. The catalyst components were filtrated at 70 degrees C using a 1-µm filter, so that 3.0 kg of a hydride (1-decene oligomer obtained by a metallocene catalyst: mPAO-1) was obtained.

### Manufacturing Example 2

Manufacturing Example 2 was conducted in the same manner as that in Manufacturing Example 1 except for 105 degrees C of the polymerization, so that 23.7 kg of a colorless, transparent and viscous liquid excluding light components, 4.7 kg of a colorless, transparent and viscous liquid completely excluding components of twenty repeating units or less, and 3.0 kg of a hydride (1-decene oligomer obtained by a metallocene catalyst: mPAO-2) were obtained.

### Manufacturing Example 3

Manufacturing Example 3 was conducted in the same manner as that in Manufacturing Example 1 except for 92 degrees C of the polymerization, so that 26.0kg of a colorless, transparent and viscous liquid excluding light components, 4.9kg of a colorless, transparent and viscous liquid completely excluding components of twenty repeating units or less, and 3.0 kg of a hydride (1-decene oligomer obtained by a metallocene catalyst: mPAO-3) were obtained.

### Manufacturing Example 4

Manufacturing Example 4 was conducted in the same manner as that in Manufacturing Example 2 except that a mixture of 16.6 L of 1-octene and 23.4 L of 1-dodecene was used in place of 40 L of 1-decene, so that 24.3kg of a colorless, transparent and viscous liquid excluding light components, 4.7kg of a colorless, transparent and viscous liquid completely excluding components of twenty repeating units or less, and 3.0 kg of a hydride (1-octene /1-dodecene oligomer obtained by a metallocene catalyst: mPAO-4) were obtained.

### Manufacturing Example 5

Manufacturing Example 5 was conducted in the same manner as that in Manufacturing Example 4 except for 88 degrees C of the polymerization, so that 25.3kg of a colorless, transparent and viscous liquid excluding light components, 4.9kg of a colorless, transparent and viscous liquid completely excluding components of twenty repeating units or less, and 3.0 kg of a hydride (1-octene /1-dodecene oligomer obtained by a metallocene catalyst: mPAO-5) were obtained.

### Examples 1 to 5 and Comparatives 1 to 5

Lubricating oil compositions were prepared according to the compositions shown in Table 1 using the following base oils, synthetic oils and additives. The sample oils prepared in Examples 1 to 5 and Comparatives 1 to 5 were evaluated in terms of properties (i.e., kinematic viscosities at 40 degrees C and 100 degrees C, an extrapolated viscosity, a viscosity index, a low-temperature viscosity, a traction coefficient) by the aforementioned method. Moreover, the sample oil prepared in Example 3 was evaluated as compared with a commercially available differential oil "75W-85 GL-5" (Comparative 5) in terms of friction loss and the aforementioned properties by the aforementioned method. The results are shown in Table 2.
Mineral oil-1: a highly purified mineral oil (kinematic viscosity at 100 degrees C of 5.1 mm²/s, viscosity index of 131)
Mineral oil-2: a highly purified mineral oil (kinematic viscosity at 100 degrees C of 9.3 mm²/s, viscosity index of 114)
Ester: diisodecyl adipate (kinematic viscosity at 100 degrees C of 3.6 mm²/s, viscosity index of 142)
mPAO-1: mPAO obtained in Manufacturing Example 1 (kinematic viscosity at 100 degrees C of 40 mm²/s, viscosity index of 178)
mPAO-2: mPAO obtained in Manufacturing Example 2 (kinematic viscosity at 100 degrees C of 58 mm²/s, viscosity index of 184)
mPAO-3: mPAO obtained in Manufacturing Example 3 (kinematic viscosity at 100 degrees C of 91 mm²/s, viscosity index of 200)
mPAO-4: mPAO obtained in Manufacturing Example 4 (kinematic viscosity at 100 degrees C of 57 mm²/s, viscosity index of 177)
mPAO-5: mPAO obtained in Manufacturing Example 5 (kinematic viscosity at 100 degrees C of 137 mm²/s, viscosity index of 209)
EPO-1: ethylene-propylene oligomer (kinematic viscosity at 100 degrees C of 40 mm²/s, viscosity index of 155), manufactured by Mitsui Chemicals, Inc.: product name "LUCANT HC-40"
EPO-2: ethylene-propylene oligomer (kinematic viscosity at 100 degrees C of 100 mm²/s, viscosity index of 165), manufactured by Mitsui Chemicals, Inc.: product name "LUCANT HC-100"
PAO: 1-decene oligomer (kinematic viscosity at 100 degrees C of 101 mm²/s, viscosity index of 176), manufactured by Chemtura, Inc.: product name "Synton PAO 100" Additive-1: manufactured by The Lubrizol Corporation, product name "Anglamol 9001N" Additive-2: manufactured by Sanyo Chemical Industries, Ltd, product name "ACLUBE 146"

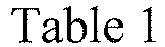

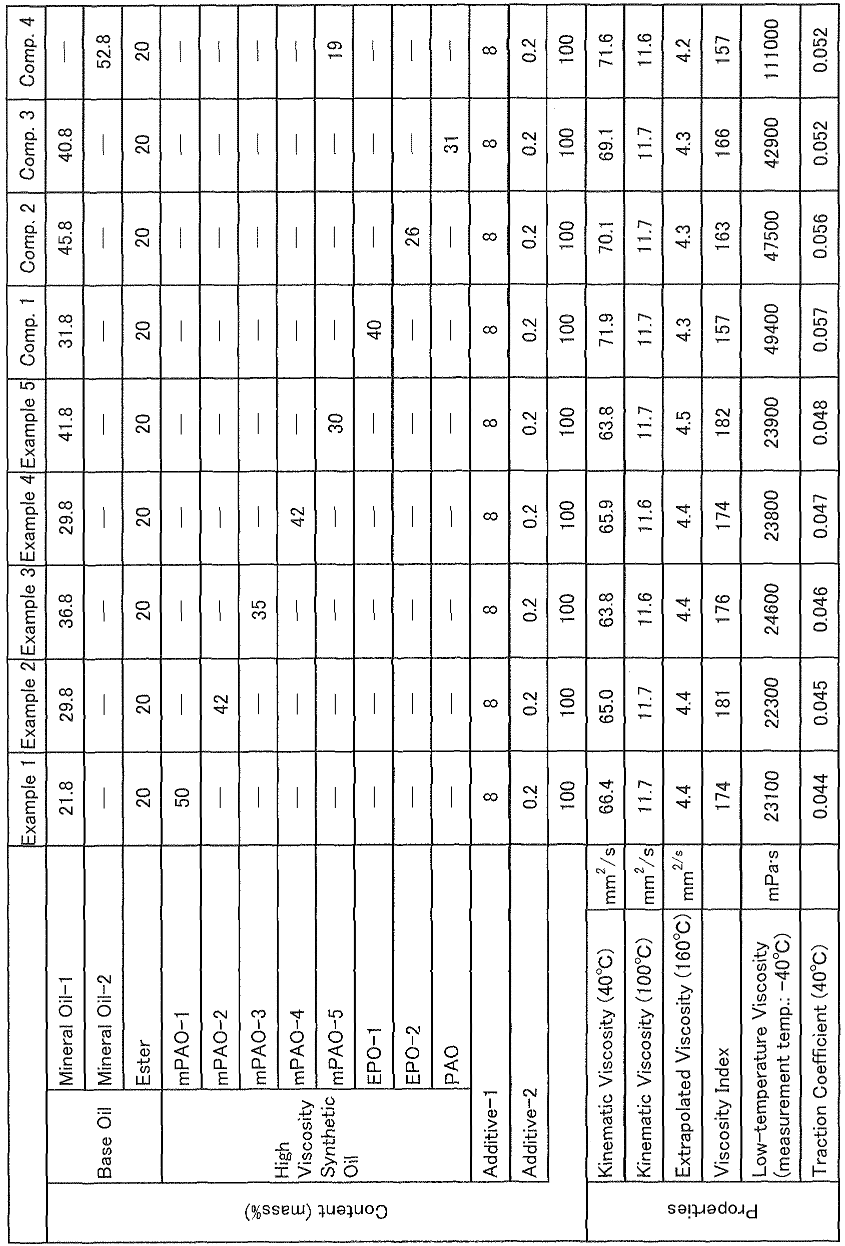

**Table 2**

| | | | | Example 3 | Comp. 5 |
|---|---|---|---|---|---|
| Kinematic Viscosity (40°C) | | | mm²/s | 63.8 | 72.9 |
| Kinematic Viscosity (100°C) | | | mm²/s | 11.6 | 11.7 |
| Extrapolated Viscosity (160°C) | | | mm^{2/s} | 4.4 | 4.3 |
| Viscosity Index | | | | 176 | 156 |
| Low-temperature Viscosity (measurement temp.: -40ºC) | | | mPa·s | 24600 | 76000 |
| Traction Coefficient (40°C) | | | | 0.046 | 0.053 |
| Oil temperature rise test | | | | | |
| | Condition 1 | Oil temperature rise (after 20 min) | °C | 47 | 50 |
| | | Oil temperature rise (after 40 min) | °C | 60 | 64 |
| | Condition 2 | Oil temperature rise (after 20 min) | °C | 52 | 58 |
| | | Oil temperature rise (after 40 min) | °C | 70 | 75 |

### Evaluation Results

As apparent from the results shown in Table 1, in the lubricating oil compositions of the invention (in Examples 1 to 5), although a kinematic viscosity at 100 degrees C falls within a range of 11.6 mm²/s to 11.7 mm²/s, a kinematic viscosity at 40 degrees C is lower than that of the lubricating oil compositions of Comparatives 1 to 4 and a kinematic viscosity at 160 degrees C is higher that that of the lubricating oil compositions of Comparatives 1 to 4. Consequently, it was verified that, according to the lubricating oil compositions of the invention, viscosity reduction at ordinary temperatures is achievable while oil-film retention is maintainable at high temperatures. Moreover, since the traction coefficient of the lubricating oil compositions of the invention (in Examples 1 to 5) is lower than that of the lubricating oil composition of Comparatives 1 to 4, the lubricating oil compositions of the invention exhibit an excellent low-friction property on an elastohydrodynamic lubricating area such as a tooth flank of a gear and a rolling contact surface of a rolling bearing. Further, it was verified that the low-temperature fluidity of the lubricating oil composition of the invention is excellent because the low-temperature viscosity of the lubricating oil composition of the invention is lower than that of the lubricating oil composition of Comparatives 1 to 4.
As apparent from the results shown in Table 2, in the lubricating oil composition of the invention (in Example 3), although a kinematic viscosity at 100 degrees C is 11.6 mm²/s, the obtained oil temperature rise is smaller than that of the lubricating oil composition of Comparative 5 in the oil temperature rise test. Accordingly, it was verified that, according to the lubricating oil compositions of the invention, friction-loss reduction at ordinary temperatures is achievable while oil-film retention is maintainable at high temperatures.

### INDUSTRIAL APPLICABILITY

A lubricating oil composition of the invention is suitably usable as a lubricating oil composition for a gear device that is used in a manual transmission and a final reduction gear for automobiles, a step-up gear and a reducer for industrial machines, and the like.

## Claims

1. A lubricating oil composition comprising: (a) a base oil for a lubricating oil having a kinematic viscosity at 100 degrees C in a range of 2 mm²/s to 10 mm²/s; and (b) a poly-alpha-olefin having a kinematic viscosity at 100 degrees C in a range of 15 mm²/s to 300 mm²/s, the poly-alpha-olefin (b) being produced using a metallocene catalyst, a content of the poly-alpha-olefin (b) being 20 mass% or more based on a total amount of the composition.

2. The lubricating oil composition according to claim 1, wherein
the lubricating oil composition has a kinematic viscosity at 100 degrees C in a range of 5 mm²/s to 20 mm²/s.

3. The lubricating oil composition according to claim 1 or 2, wherein
the poly-alpha-olefin (b) is provided by a poly-alpha-olefin having a kinematic viscosity at 100 degrees C in a range of 40 mm²/s to 150 mm²/s, the poly-alpha-olefin (b) being produced using a metallocene catalyst.

4. The lubricating oil composition according to any one of claims 1 to 3, wherein
the lubricating oil composition is used for a gear device that is used in a manual transmission or a final reduction gear for automobiles, or a step-up gear or a reducer for industrial machines.
